# EUROPEAN PATENT APPLICATION

(11) **EP 2 565 858 A1**
(43) Date of publication of application: **06.03.2013**
(21) Application number: 12179760.9
(22) Date of filing: 07.03.2008
(51) Int. Cl.: G08B 17/10, G01N 15/06

(54) **Method and system for particle detection**

(30) Priority: 09.03.2007 AU 2007901285
(62) Divisional of application: 08714363.2
(71) Applicant: Xtralis Technologies Ltd, 3933 Nassau (BS)
(72) Inventor: Ajay, Kemal, Victoria, 3165 (AU)
(74) Representative: Isarpatent

(57) **Abstract**

An apparatus (10) for detecting particles in an airflow is disclosed. The apparatus (10) is of the type that detects light scattering from an illuminated volume to determine a level of particles in an airflow passing through said illuminated volume. The particle detection apparatus (10) includes a plurality of spatially separated, monitored, illuminated volumes (34, 38) from which scattered light is to be detected by one or more light detection stages (30, 32). The particle detection apparatus (10) is configured to compare a signal indicative of the light scattered from a plurality of monitored, illuminated volumes to confirm either the detection of particles in the airflow or that a false particle detection condition has occurred.

## Description

### Field of the invention

The present Invention relates to a method and system for detecting particles. The preferred embodiments of the present invention will be described in the context of detecting smoke. However, the present invention should not be considered as being limited to this exemplary application.

### Background of the invention

Particle detectors which detect airborne particles on the basis of the amount of light scattered from a beam of radiation, such as the smoke detectors sold under the trade mark VESDA by Vision & Fire & Security Pty Ltd, provide a highly sensitive way of detecting particles. These smoke detectors operate by transmitting a beam of light, typically from a laser, or flash tube, through a stream of air in which particles may be present. A photo-detector, such as a photodiode or other light sensitive element is placed at a predetermined position with respect to illuminated volume and the amount of scattered light received by the photo-detector is used to determine the level of particulate matter in the airflow.

Due to the relatively small "region of interest" of such detectors, and the relatively low scattering efficiency of the airstream which may be as low as 0.005% obscuration per metre, the photo-detector must be highly sensitive. The region of interest can be defined as the region of intersection between the volume illuminated by the light source, and volume from which the light receiver may receive light. Typically in such detectors, the difference between the level of received light, with and without smoke (at a level sufficiently high to be of interest), is in the picowatt range. Therefore the detection electronics and software which analyses the output from the detector must be finely tuned to correctly distinguish particles in the airstream, from background signals and noise.

Because of the high level of sensitivity required, such smoke detectors are at risk of producing false alarms if a foreign body such as a dust particle or insect enters the "region of interest" of the detector.

In order to minimise the possibility of unwanted material entering the region of interest, or the detection chamber of the particle detector at all, a variety of screening and filtering solutions have been proposed. One such example is the use of a "bulk filter" such as a foam or paper filter, which is used to filter out particles larger than the particles to be detected. However, the particles of interest (such as smoke particles) may occur in a variety of sizes depending on application and filters need to be chosen carefully to avoid removing particles of Interest. Moreover, even if such filters are selected correctly initially, as such conventional bulk filters clog they begin to remove more particles from the air and will eventually begin filtering out the small particles of interest. This may be due to the effective pore sizes of the filter being reduced as more particles clog the filter. This can be a problem because such filters start undesirably removing the particles of interest before the flow rate through the filter changes appreciably. The result is that the filter may begin removing an unknown proportion of the particles of interest.

An alternative solution to using a bulk filter is using a screen filter, such as a mesh filter, which will capture all particles having a cross section larger than the mesh hole size. However, such mesh filters do not prevent some elongate particles from passing through them.

In some instances, it is also possible for an accumulation of dust to build up in the detection chamber or for particles to adhere to each other to an extent that long filaments of dust, "grow" in the detection chamber. In extreme situations this may continue until the long filaments impinge upon the region of interest.

Clearly with such highly sensitive devices any large object that impinges on the illuminated volume will cause a significant level of light scattering in the detection chamber which may lead (or contribute) to an the triggering of a false alarm. This is particularly the case if the object enters the region of interest.

Accordingly, it is desirable for particle detectors, such as smoke detectors to have systems and methods to identify or prevent false alarms caused by the impingement of unwanted contaminants in their detection regions.

### Summary of the invention

In a first aspect the present invention provides a method of detecting particles in an airflow, the method including: illuminating a first volume of the airflow; detecting light scattered from the first volume; illuminating a second volume of the airflow; detecting the light scattered from the second volume; comparing the light scattered from the first volume and the second volume; and determining whether particles have been detected in the airflow at least partially on the basis of the comparison.

Preferably the step of determining whether particles have been detected in the airflow includes comparing a level of light scattered from the first and second volumes. In the event that the level of light scattered from the first and second volumes are substantially equal, the light scattering can be determining to be the result of particles of interest present in the airflow. Alternatively in the event that the level of light scattered from the first and second volumes are different, it can be determined that a fault condition exists in the detector. The method may also include providing notification that a fault condition exists.

Preferably the particles to be detected are smoke particles.

In a second aspect the present Invention provides a method of identifying a false particle detection condition in a particle detector configured to detect particles in an airflow the particle detector including, means for illuminating a plurality of volumes in the airflow, means for detecting light scattered from the plurality of volumes of the airflow, said method including; comparing measurements of light scattered from at least a first of said volumes and at least a second of said volumes; and in the event that the light scattered from the first volume and the second volume are not substantially the same; identifying that a false particle detection condition has occurred.

In the event that light scattered from the first volume and the second volume are substantially the same the method includes identifying that a false particle detection condition has not occurred.

In a third aspect the present invention provides an apparatus for detecting particles in an airflow the apparatus including: at least one light source for illuminating a plurality of volumes within the airflow; a plurality of photo-detectors positioned to detect light scattered from a respective one of the illuminated volumes; a signal processing apparatus configured to process an output of at least two of said photo-detectors and to determine whether particles have been detected in the airflow.

The apparatus can include a plurality of light sources for illuminating the plurality of volumes within the airflow.

The signal processing apparatus can include means to compare a value representative of the outputs of two or more photo-detectors. The output of the comparison can be used to determine whether particle detection fault has occurred. In the event that the value representative of the outputs of two or more photo-detectors are similar no fault is detected. In the event that comparison indicates that different levels of scattered light have been received at the plurality of photo-detectors a fault condition is identified. Typically this fault condition will indicate that there is a foreign body (i.e. not a particle intended to be detected) within one or the illuminated volumes within the airflow.

The first volume and the second volume can be illuminated by separate light sources. Alternatively they can be illuminated by a common light source.

If the first and second volumes are illuminated by separate light sources, light scattered from both the first and second volumes can be monitored by either a common light detecting means or separate light detecting means.

In a fourth aspect the present invention provides an apparatus for detecting particles in an airflow the apparatus including: at least one light source for illuminating a plurality of volumes within the airflow; a plurality of photo-detectors positioned to detect light scattered from a respective one of the illuminated volumes; a processor means configured to determine a level of particles detected in the airflow and in the event that a predetermined condition is met to cause an alarm to be triggered, the processor means additionally being configured to compare a value indicative of an output of at least two of the plurality of photo-detectors and to determined an output of one of the photo-detectors is affected by a contaminant in its respective illuminated volume.

In the event that the values indicative of an output of at least two of the plurality of photo-detectors are not substantially equal it can be determined that a contaminant is present in one of the illuminated volumes of the apparatus. The processor means can be configured to not trigger an alarm if it determines that a contaminant is present in one of the illuminated volumes of the apparatus.

In a fifth aspect the present invention provides a particle detection apparatus including;
a plurality of light sources illuminating a plurality of volumes within an airflow,
at least one photo-detector able to detect light scattered by particles within at least two of said volumes;
and wherein said light sources may be individually controlled in intensity in time to permit determination of which of said at volumes is the source of scattered light received at a photo-detector.

The light sources may be individually controlled in intensity according to a predetermined scheme. The intensity modulation of the light sources can be correlated with detected light scatter to determine which volumes is the source of scattered light received at a photo-detector.

Each light source can be modulated in intensity with a unique sequential code. The code may be selected from a set of orthogonal or near-orthogonal codes, for example a Gold code.

The particle detection apparatus can additionally include signal processing configured to recover a signal indicative of detected light scattered from each volume using correlation techniques.

In the event that the values derived from at least two of the aforementioned plurality of volumes are not substantially equal, it can be determined that a contaminant is present in at least one of the volumes of the apparatus.

In a further aspect the present invention provides a particle detection apparatus of the type that detects light scattering from an illuminated volume to determine a level of particles in an airflow passing through said illuminated volume; said particle detection apparatus including a plurality of spatially separated monitored, illuminated volumes from which scattered light is to be detected by one or more light detection stages; wherein said particle detection apparatus is configured to compare a signal indicative of the light scattered from a plurality of monitored, illuminated volumes to confirm the detection of particles in the airflow.

The particle detection apparatus can be configured to confirm the detection of particles in the airflow if the output of a plurality of light detection stages that monitor a common airflow is substantially the same.

In this case the particle detection apparatus preferably includes a plurality of light sources configured to illuminate respective volumes of a common airflow. Preferably the light sources are activated and deactivated to illuminate their respective volumes of the airflow in a predetermined pattern or in a manner responsive to a level of particles detected.

Advantageously in the event that a predetermined concentration of particles are detected, or the rate or change of the concentration of particles detected (or some other metric) meets a predetermined condition, one or more of the light sources can be temporarily turned off. This allows an output from a light detection stage(s) monitoring the remaining illuminated light sources to be separately processed.

Advantageously this allows fault conditions that affect the level of scattered light being received, such as the entry of foreign body into the illuminated volume, to be detected.

In another aspect the present invention provides a method, in a particle detector, for validating an initial particle detection event In respect of a first volume In an airflow, the method including: attempting to detect particles in a second volume In the airflow that is different to the first volume in which the initial particle detection event occurred; and if a particle detection event occurs in the second volume; validating the initial particle detection event.

The method may include attempting to detect particles in a first volume, and if particles are detected, determining that an initial particle detection event has occurred.

The first volume may include the second volume. Alternatively the second volume may include the first volume.

The method can include causing alarm if the initial particle detection event is validated and one or more additional alarm conditions is met.

In another aspect the present invention provides an apparatus for detecting particles in an airflow the apparatus including:
at least one light source for illuminating a one or more portions of the airflow;
at least one photo-detector positioned to detect light scattered from one or more illuminate volumes of the airflow; wherein said at least one light source and at least one photo detector are arranged such that a signal indicative of light scattered from a plurality of illuminated volumes can be derived from the output of the at least one photo detector; and
a signal processing apparatus configured to process said signals indicative of light scattered from a plurality of illuminated volumes to determine whether particles have been detected in the airflow.

In preferred embodiments of the above aspects of the invention, the particles to be detected (particles of interest) are smoke particles.

In another aspect the present invention also provides a smoke or particle detection system including an apparatus for detecting particles operating in accordance with any one of the aforementioned aspects of the invention.

### Brief description of the drawings

Preferred forms of the present invention will now be described, by way of non limiting example only, with reference to the accompanying drawings, in which:
Figure 1 is a cross sectional view through a smoke detector made in accordance with the first embodiment of the present invention;
Figure 2 is a cross sectional view of the detection chamber of the smoke detector of Figure 1;
Figure 3 is a schematic view of the detection chamber of the smoke detector of Figure 1;
Figure 4 is a cross section through a smoke detector according to a second embodiment of the present invention;
Figure 4A is a cross sectional view of the smoke detector perpendicular to that shown in Figure 4;
Figure 5 is a cross section through a third embodiment of a smoke detector with multiple smoke detection channels operating in accordance with the present invention; and
Figure 6 is a cross section through another embodiment of a smoke detector with multiple smoke detection channels operating inn accordance with an embodiment of the present invention.

### Detailed description of the embodiments

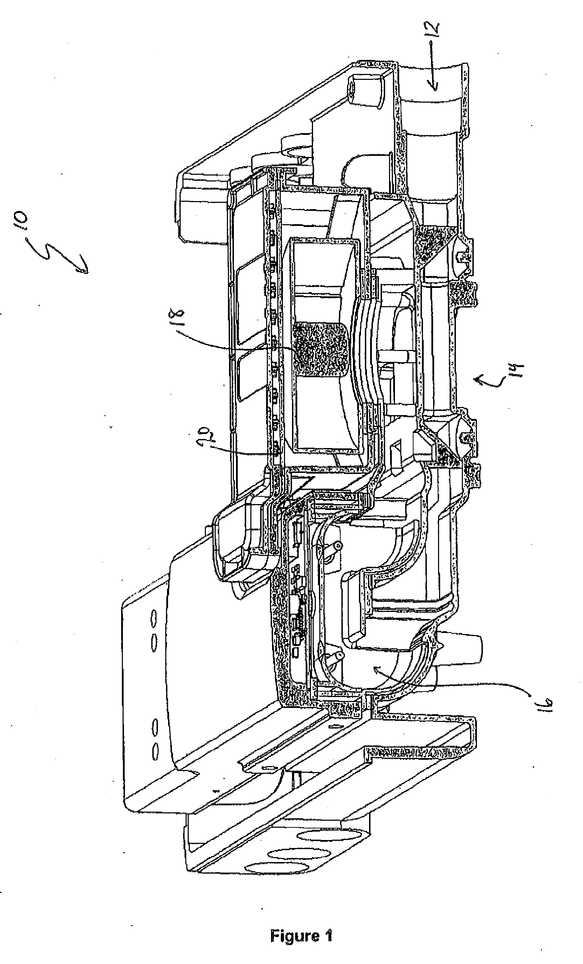

Figure 1 shows a cross section taken through a smoke detector 10, which operates in accordance with an embodiment of the present invention. Smoke detector 10 is fully described in our co-pending provisional patent application, filed on the same date as the present application entitled "Particle Detection Apparatus", and filed in the name of VFS Technologies Limited.

In general terms, the smoke detector 10 includes an airflow path beginning with an input port 12 into which an air sample is drawn, typically from a sampling pipe network. The airflow passes into a flow detection region 14 in which the speed of flow is determined. The flow rate may be determined by any means, but preferably is conducted using an ultrasonic flow sensor such as the one described in international patent publication no. WO2004/102499, the contents of which are incorporated herein by reference. After passing out of the flow detection region 14 the airflow passes into the detection chamber 16 of the smoke detector 10 in which the airflow is analysed to determine whether it contains smoke, and if so, whether an alarm condition should be triggered. The airflow is extracted from the detection chamber 16 by a fan 18 and vented via an exhaust port (not shown) out of the detector 10. As discussed in our co-pending application, a proportion of the exhaust air is also filtered by filter element 20 and the clean air supplied to the housing of the detection electronics to clean its optical surfaces.

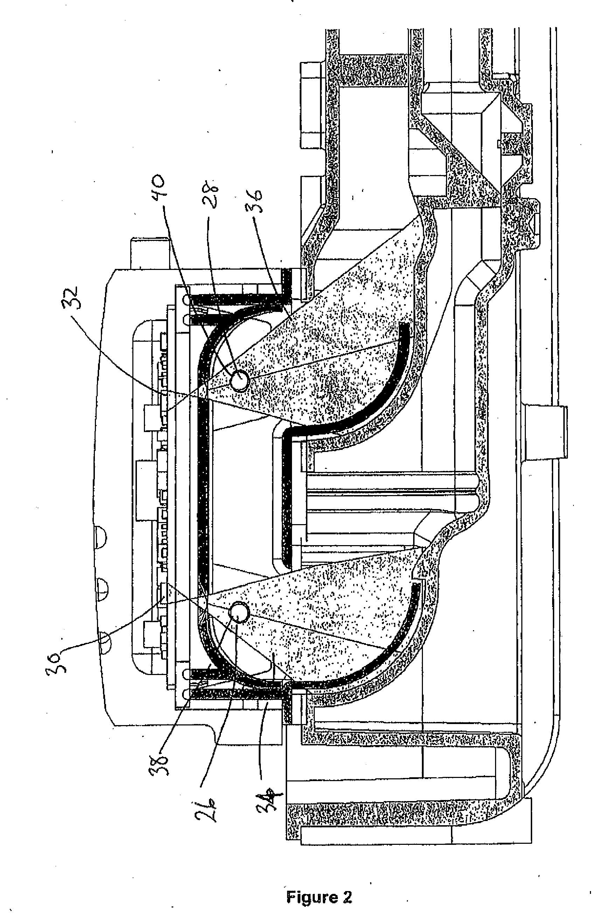

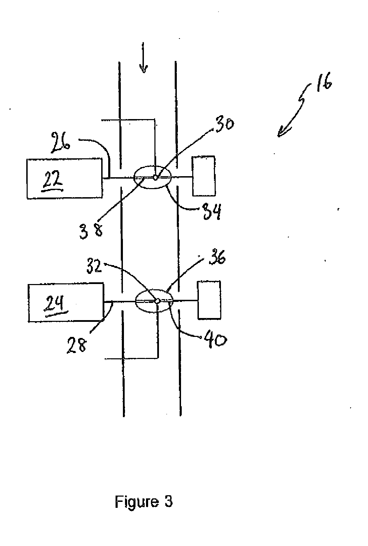

Additional detail of detection chamber 16 of the present embodiment is shown in Figures 2 and 3. In this regard, figure 2 depicts a cross sectional view of the detection chamber 16 of the detector 10, whilst Figure 3 shows a schematic cross-sectional view of the detection chamber from above.

In the preferred embodiment, the detection chamber 16 includes two lasers 22 and 24 configured to emit respective beams of electromagnetic radiation 26 and 28 which traverse the fluid flow in the detection chamber 16. A pair of photo-detectors 30 and 32 are provided which are able to sense light over respective sensing volume 34 and 36 respectively. Each photo-detector 30 and 32 is aligned with a corresponding laser beam 26 and 28 so that its field of view intersects with a portion of laser beam forming two regions of interest 38 and 40, As will be appreciated, the volume 34 and 36, being monitored by each photo-detector 30 and 32, is generally conical, as can be seen by the cross section illustrated in figure 2. The region of Interest being monitored for laser beam 26 is illustrated with reference numeral 38 and the region of interest being monitored for laser beam 28 is given reference numeral 40 in Figure 3.

In use, when particles suspended in the airflow pass through the regions of interest 38 and 40 light from each of the laser beams will be scattered out of the laser's direct path. A portion of this scattered light from each beam 26 and 28 will be scattered in the direction of the respective photo-detectors 30 and 32 and be received thereby. From the signal output from the photo-detectors the level of particulate matter in the airflow can be inferred. Those skilled in the art will appreciate that various techniques are known to differentiate different particle types, e.g. differentiating smoke from dust, by selecting an appropriate geometry for the laser beams and photo detectors.

Because the regions of interest are spatially distinct, when particles suspended in the airflow In the detection chamber 16 pass one of the regions of interest 38 and 40 light will only be detected by its respective photo detector 32, 34 but not the other. By comparing the output from each of the detectors a determination can be made whether similar particulate loads are being detected by each detector. In the event that substantially similar particulate loads are detected in both regions of interest it is reasonable to infer that, absent any independently detected signs of device failure, that the detectors are operating correctly and that the scattering being detected by the photo-detectors is the result of particles entrained in the airflow as these will typically be spread uniformly throughout the detection chamber. On the other hand, if the particulate loads inferred from the scattering being detected by the photo-detectors are different it is likely that the output of one of the detectors does not reflect the level of particles of interest in the airflow.

This failure to accurately detect the level of said particles in the airflow in one of the regions of interest, may be due to one of more of several factors, including, but not limited to;
a failure in one or more components associated with monitoring or illuminating one of the regions of interest that may cause either a high or low output signal,
a foreign body impinging on one of the regions of interest, that increases the level of scattering in that region of interest, or
a foreign body obscuring the view of one of the photo-detectors.

In the preferred embodiments, a comparison of the signals indicative of light scattered from multiple spatially distinct air volumes is advantageously used for detecting the presence of foreign bodies In the detection chamber.

Whilst particle detectors often have other methods of monitoring the operational condition of the detection and illumination systems, and may be provided with systems for ensuring optically critical surfaces are free from obstruction, e.g. by blowing clean air onto critical optical surfaces and through the viewing apertures for the photo-detectors, other embodiments can use the comparison of the signals derived from multiple spatially distinct air volumes to monitor these aspects of the detector operation.

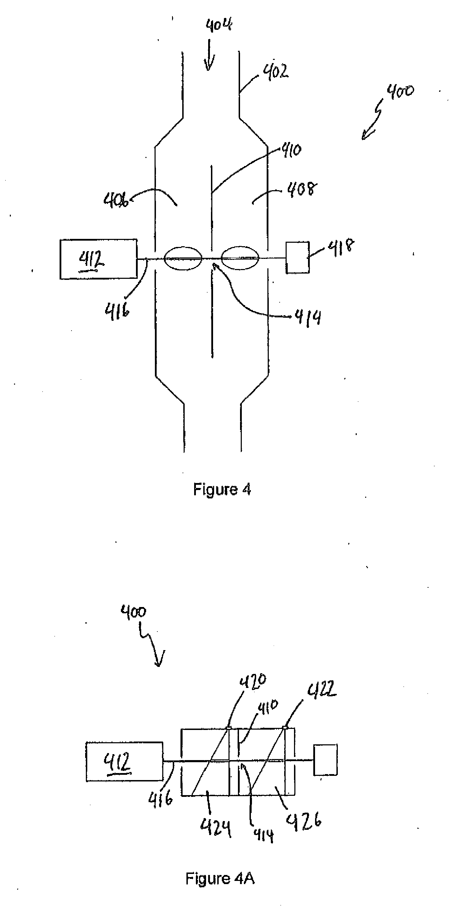

Figure 4 illustrates a second embodiment of an aspect of the present invention. In this embodiment, rather than using two light sources to illuminate two spatially distinct regions of interest of the same sample flow, a single light source is used to illuminate two regions of interest. In figure 4 the particle detector 400 includes a single input port 402 into which a sample flow is drawn in a direction of arrow 404. The sample is effectively split into two sub-flows 406 and 408 by wall 410. A light source 412, in this case a laser, is configured to illuminate a portion of both sub-flows 406 and 408. The wall 410 has an aperture 414 formed in it, through with the laser's beam 416 passes to enable the sub-flow located furthest from the laser 412 to be illuminated. The detector also includes a light dump 418 that is configured to terminate the laser's beam 416 in a controlled manner, i.e. with minimal back reflection Into the detection chamber. A photo detector 420, 422 is placed on each side of the dividing wall 410 such that each photo-detector 420, 422 can collect light scattered from the laser's beam 416 as it passes through a corresponding sub-flow 406, 408. The intersection of the laser's beam 416 and the viewable volume 424 and 426 of each of the photo detectors 420, 422 create two spatially distinct regions of interest within the particle detector 400. Signals from each of the photo-detectors 420 and 422 can be used in the manner described in the previous embodiment to improve the robustness of smoke detections made with the smoke detector 400.

Advantageously, by providing a dividing wall between the two photo-detectors 420 and 422 the light detected by each photo detector will be largely Independent of the light detected by the other. Thus if a foreign body were to enter one of the regions of interest such that it would cause unwanted light scattering, the level of scattered light received by the photo-detector monitoring the other region of interest would be largely unaffected. It may be possible to have embodiments that do not include a wall such as the one depicted in this embodiment, but simply have two photo-detectors each collecting light scattered from two different portions of the laser beam as it traverses a sample flow, but such an arrangement may be more susceptible to false alarms caused by very large particles that may enter both regions of interest, or particles which scatter light to the extent that both photo-detectors are affected even if the particle does not enter its region of interest.

This scheme of providing a plurality of regions of interest in each sample flow in order to improve the reliability of particle detection events can be extended to alternative arrangements, a selection of which will be described below.

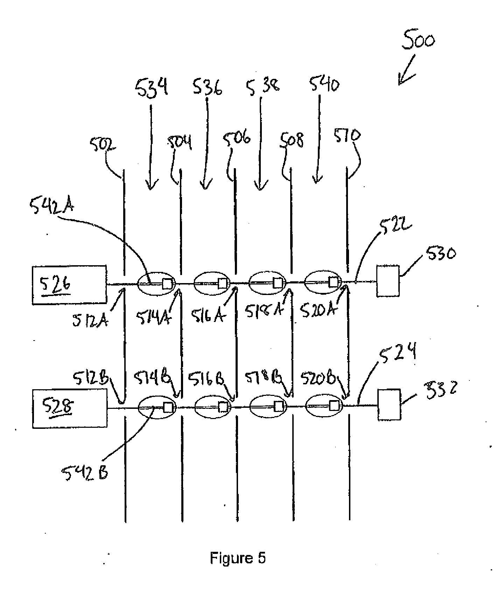

In the third embodiment, depicted in figure 5, a particle detector 500 is shown, in which four air samples can be analysed at simultaneously using two light sources. In this embodiment a four detection chambers are defined by walls 502, 504, 506, 508 and 510. Each wall is provide with a respective pair of apertures 512A and 512B, 514A and 5124, 516A and 516B, 518A and 518B, 520A and 520B through which a corresponding beam 522 or 524 of respective lasers 526 and 528 pass. Each beam 522 and 524 are terminated in a respective light dump 530 and 532. The walls 502, 504, 506, 508 and 510 define four airflow paths 534, 536, 538 and 540 through which 4 airflows may pass in use. Each flow path 534, 536, 538 and 540 is provided with two photo-detectors e.g. 542A and 542B for flow path 534, which are configured to view at least part of each laser beam 522 and 524 as it traverses each flow path 534, 536, 538 and 540. As with the first embodiment each flow path is provided with two spatially distinct regions of interest. Thus, as will be seen each of the plurality of sample flows can be treated in the manner described in connection with the embodiment depicted in figure 1, with the attendant advantages.

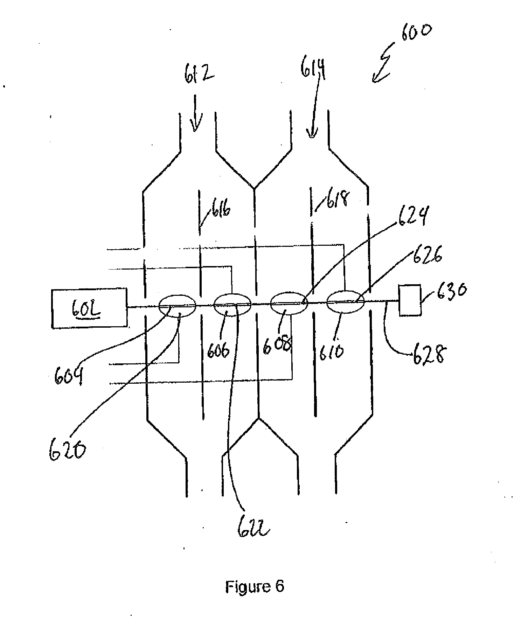

Figure 6 shows another embodiment of a particle detection apparatus made in accordance with an aspect of the present invention. The detector 600 of this embodiment, includes a single light source 602 to illuminate four regions of interest 604, 606, 608 and 610 in two airflows 612 and 614. The structure of the airflow paths is similar to that of figure 4, in which each airflow is divided into sub-flows by a dividing wall 616 and 618, and a common laser source illuminates a portion of both sub-flows. Similarly each sub-flow has a dedicated photo detector viewing a portion of it 620, 622, 624 and 626 to create a pair of spatially distinct regions of interest in each of the airflows 612 and 614. The beam 628 of the single laser 602 traverses each of the walls defining the flow paths through apertures formed in them and is terminated in a light dump 630.

The use of a plurality of spatially separated regions of interest to analyse a sample flow in a particle detection apparatus in the preferred embodiments depicted herein may require a corresponding plurality of photo detection stages.
In order to enable a detector to differentiate between a signal derived from one region of interest or another, it can be advantageous for the light source to be cycled and the distinct regions of interest to be illuminated intermittently. In systems with two or more light sources the illumination cycles of each of the regions of interest can be staggered to selectively illuminate them in a predetermined manner, e.g. for system with two regions of interest, in a first time period a only a first region of interest may be illuminated, for a second time period both regions of interest can be illuminated and for a third time period only the other (second) region of interest can be illuminated.
Another example of a suitable intensity-time control scheme is to individually switch said light sources on and off and to correlate the detected light scatter with the volume illuminated at that time. A further example of a suitable intensity-time control scheme is to use coding sequences wherein each light source is modulated in intensity with a unique sequential code. The code may be selected from a set of orthogonal or near-orthogonal codes, for example a Gold code. A signal processing means can be used to process the received scattering signals, using correlation techniques to determine the individual contribution of scatter from each volume.
In the event that the values derived from at least two of the aforementioned plurality of volumes are not substantially equal, it can be determined that a contaminant is present in at least one of the volumes of the apparatus and consequently a processing means can be configured to not trigger an alarm.

In a preferred form the particle detector is of the aspirated type, and may include a fan or other means to draw air through the regions of interest. Alternatively the aspiration means may be provided as a separate component of a particle detection system. The airs ample to be analysed can be continuously drawn from a room or other region being monitored for particles e.g. smoke. In this case the particle detector can be part of a system that draws an air sample through a pipe network consisting of one or more sampling pipes with sampling holes installed at positions where air carrying smoke or particles can be collected. Air is drawn in through the sampling holes and along the pipe by means of a fan and is directed through a detector at a remote location.

As will be appreciated, embodiments of the present invention can be extended to any number of lasers, chambers, photo-detectors and regions of interest by making appropriate changes that will be apparent to those skilled in the art.

It will be understood that the invention disclosed and defined in this specification extends to all alternative combinations of two or more of the individual features mentioned or evident from the text or drawings. All of these different combinations constitute various alternative aspects of the invention.

It will also be understood that the term "comprises" (or its grammatical variants) as used in this specification is equivalent to the term "includes" and should not be taken as excluding the presence of other elements or features.

## Claims

1. A method of identifying a false particle detection condition in a particle detector configured to detect particles in an airflow the particle detector including, means for illuminating a plurality of volumes each volume including at least one region of interest traversed by at least part of the airflow, means for detecting light scattered from the plurality of regions of interest, said method including; comparing measurements indicative light scattered from a first region of interest and a second region of interest; and in the event that the light scattered from the first region of interest and the second region of interest do not correspond to substantially the same level of particles in the air flow; identifying that a false particle detection condition has occurred.

2. A method as claimed in claim 1, wherein the false particle detection condition indicates contamination of a device in which either or both of the first or second volumes reside.

3. A method as claimed in claim 1 or 2 wherein the method includes providing a notification of the false particle detection condition and/or wherein the plurality of regions of interest are spatially distinct.

4. A method as claimed in any preceding claim, including individually controlling the intensity in time of the illumination of the plurality of volumes to permit determination of which of said regions of interest is the source of the scattered light detected.

5. A method as claimed in claim 1 which further includes, in the event that the level of light scattered from the first and second regions of interest correspond to substantially the same level of particles in the airflow, indicating at least that particles have been detected, in particular causing an alarm if particles have been detected.

6. A method as claimed in any one of the preceding claims wherein the particles to be detected are smoke particles.

7. An apparatus for detecting particles of the type that detects light scattering from an illuminated volume to determine a level of particles in an airflow passing through said illuminated volume; said particle detection apparatus including a plurality of spatially separated, monitored, illuminated volumes from which scattered light is to be detected by one or more light detection stages; wherein said particle detection apparatus is configured to compare a signal indicative of the light scattered from a plurality of monitored, illuminated volumes to confirm either the detection of particles in the airflow or that a false particle detection condition has occurred.

8. An apparatus for detecting particles as claimed in claim 7, wherein the apparatus confirms the detection of particles in the airflow if the output of a plurality of light detection stages that monitor a common airflow is substantially the same.

9. An apparatus for detecting particles as claimed in claim 7, wherein the apparatus indicates that a false particle detection condition has occurred if the output of a plurality of light detection stages that monitor a common airflow are not substantially the same.

10. An apparatus for detecting particles as claimed in any one of claims 7 to 9, further comprising a plurality of light sources configured to illuminate respective volumes of a common airflow.

11. An apparatus for detecting particles as claimed in claim 10, wherein the light sources may be individually controlled in intensity in time to permit determination of which of said volumes is the source of scattered light received at a photo-detector.

12. An apparatus for detecting particles as claimed in claim 9 or 10, wherein the light sources are activated and deactivated to illuminate their respective volumes of the airflow in a manner responsive to a level of particles detected.

13. An apparatus for detecting particles as claimed in any one of claims 7 to 12, wherein illumination of one or more of the illuminated volumes is at least temporarily stopped in the event that one of more of the following conditions is met:
a predetermined concentration of particles is detected;
the rate or change of the concentration of particles detected meets a predetermined condition.

14. An apparatus for detecting particles according to any one of claims 7 to 13, wherein the particles to be detected are smoke particles.

15. A particle detection system including an apparatus for detecting particles as claimed in any one of claims 7 to 14, in particular further including a sampling network for introducing an air flow to the particle detection system.
